# EUROPEAN PATENT APPLICATION

(11) **EP 2 407 909 A1**
(43) Date of publication of application: **18.01.2012**
(21) Application number: 11173724.3
(22) Date of filing: 13.07.2011
(51) Int. Cl.: G06K 7/00

(54) **Database management method and RFID system**

(30) Priority: 16.07.2010 FI 20105808
(71) Applicant: Idesco Oy, 90570 Oulu (FI)
(72) Inventor: Alamäki, Heikki, 91300 Ylikiiminki (FI); Arola, Anu-Leena, 90520 Oulu (FI); Heikkinen, Pasi, 90550 Oulu (FI); Koivusaari, Seppo, 90150 Oulu (FI); Koistinen, Paula, 90570 Oulu (FI); Polvela, Juha, 90120 Oulu (FI); Rautio, Petri, 90650 Oulu (FI); Väyrynen, Erno, 90550 Oulu (FI); Väyrynen, Jukka, 90900 Kiiminki (FI)
(74) Representative: Söderman, Lisbeth Karin

(57) **Abstract**

First aspect of the invention is a database management method for RFID system. The method is mainly characterized in that databases in fixed and/or portable RFID readers of the system are updated wirelessly over IP-network from a single database unit, and in that said RFID readers store at least one preceding version of the updatable database. Second aspect of the invention is an RFID system comprising a database unit and plurality of RFID readers. The system is mainly characterized in that it realizes the method of the first aspect of the invention.

## Description

### TECHNICAL FIELD OF INVENTION

Present invention relates to database management in an RFID system.

### BACKGROUND OF THE INVENTION

Today, RFID readers are widely used for access control systems, security systems and identification systems. When a tag, a person or an item, is identified by an RFID reader, the reader may need to check information related to the identified tag, for example whether to grant access or not. The information is usually in a database which is stored to the reader or elsewhere in the system. Typically fixed RFID readers have fixed network connection to a server wherein the database is stored so that all the readers can access the same database. The database needs to be updated frequently to for example add new tags, add or remove access rights, save the last using place (entry or exit point) of tag, last activity information of reader, etc.

Fixed RFID readers have typically a fixed connection to a central database and portable RFID readers may have a wireless connection to the database. The problem is that when the connection to the database is lost, the reader loses its functionality because it can no longer get information from the database. A reader without connection to the database can not grant access nor provide any other information about a tag. This is a severe problem especially with readers with wireless network connection. Wireless network connection can be unavailable for many reasons, such as external interference, corruption of data packets, long term interferences caused by the sun or because of intentional interfering by a third party. Whenever the network connection is down, the readers are unable to connect to the database and therefore unable to function properly.

### OBJECT OF THE INVENTION

The object of the present invention is to provide a method and a system for database management which are less vulnerable to wireless network blackouts, and which can be used for database management of fixed and wireless devices.

### SUMMARY OF THE INVENTION

First aspect of the invention is a database management method for RFID system. The method is mainly characterized in that the method comprises steps of:
- updating databases tirelessly in fixed and/or portable RFID readers of the system over IP-network from a single database unit, and
- storing at least one preceding version of the updatable database to the RFID reader.

In an embodiment of the invention, the databases of all the RFID readers of the system are updated. In another embodiment, the databases of certain RFID readers of the system are updated.

In an embodiment of the invention, the IP-network can be WLAN, 6LowPan, Zigbee, UWB, GSM/GPRS, any other wireless network or a combination of wireless network.

In an embodiment of the invention, the updating of a database can be a full update or an incremental update.

In an embodiment of the invention, data between said database unit and said readers is transmitted via a controller unit.

In an embodiment of the invention, the updating of said databases can be initiated by a database unit (push database) and by a reader (pull database).

In an embodiment of the invention, the RFID readers are adapted to transmit RFID related information at least partially over IP-network to the database unit.

In an embodiment of the invention, an RFID reader is configured to function and gather information in a stand-alone mode when network connection is lost, and configured to forward said information when network connection is restored.

In an embodiment of the invention, said IP-network is a fixed network, a wireless network or a combination of fixed and wireless networks.

Second aspect of the invention is an RFID system comprising a database unit and plurality of RFID readers. The system is mainly characterized in that it realizes the method of the first aspect of the invention or any one of it's embodiments.

Third aspect of the invention is a software code product on a computer readable medium. The software code product or the computer readable medium is mainly characterized in that it comprises means for updating a database or to constitute database that is mengeable by any above-mentioned method, when run in a microprocessor.

Embodiments of the invention are combinable in suitable part.

Some embodiments of the invention are described herein, and further applications and adaptations of the invention will be apparent to those of ordinary skill in the art.

### BRIEF DESCRIPTION OF DRAWINGS

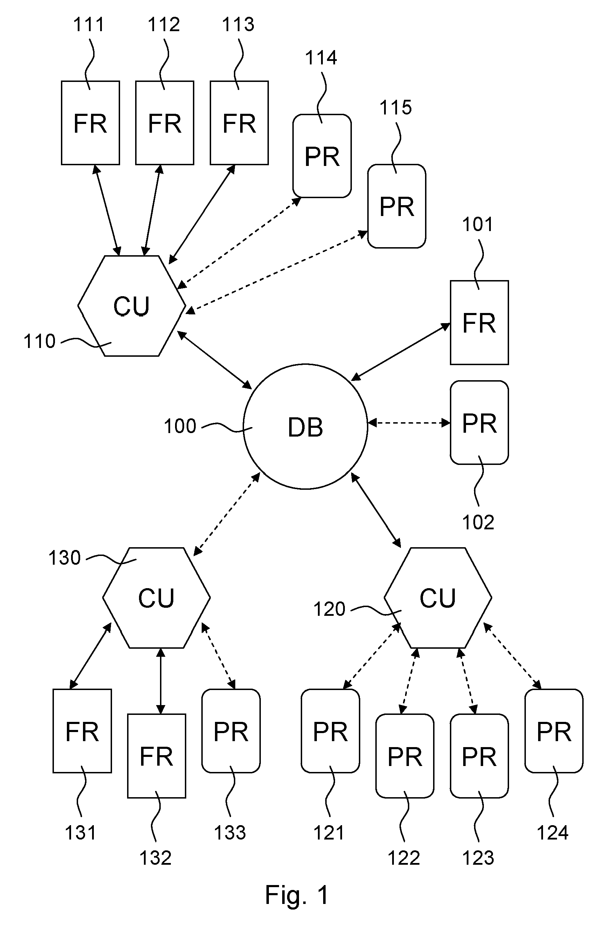

In the hollowing, the invention is described in greater detail with reference to the accompanying drawing in which
Figure 1 illustrates an RFID system of an embodiment of the invention.

### DETAILED DESCRIPTION OF THE DRAWINGS

Figure 1 illustrates an RFID system according to an embodiment of the invention. The system comprises a database unit 100, controller units 110, 120, 130, a plurality of fixed readers 101, 111, 112, 113, 131, 132 and a plurality of portable readers 102, 114, 115, 121, 122, 123, 124, 133.

In the embodiment, the database unit comprises the database. The database unit can be for example a third party host which contains the overall system or it can be a controller unit containing the database. The controller units are connected to the database unit over IP-network with a fixed connection (units 110 and 120) or with a wireless connection (unit 130). Reader units can establish a wireless or a wired connection with the controller units including the database unit in case it is also a controller unit. The fixed readers are stationary and may be fixed to a wall or other structure, but preferably those can be removed and moved to another site if necessary. The portable readers can be for example hand-held readers and/or readers that are mounted to a vehicle.

The database unit 100 is arranged to be connected to the controller units over IP-network which can consist of wired and/or wireless connections. The database unit can initiate database update process to update the databases in readers. In this push database process, the database unit enforces the database update to all or some of the readers of the system. Single database unit can update all the readers of the system throughout the world as long as the readers are connected to the database unit either directly or via controller units over IP-network, e.g. Internet.

Also a reader of the system can initiate the database update process by requesting a database update. In this pull database process, a reader sends a request to the database unit, preferably via a controller unit which forwards the request over IP-network to the database unit. The database unit responds to the request by transmitting a database update to the reader, preferably over IP-network to the controller unit and from the controller unit to the reader. A reader can request an update regardless of geographical location of the reader or the database unit as long as the reader is connected to the database unit either directly or via controller units over IP-network.

When a reader receives a database update from a database unit, the reader stores current database to memory means before the database is updated. This stored previous version of the database can be used if the update process fails for some reason, for example due to network failure. In this case, the reader maintains functionality by using the stored previous version of the database. The reader can store all events that take place white it is not connected to the database unit and transmit the stored information to the database unit after the connection is restored. Alternatively the reader can transmit the information to a controller unit which then forwards the information to the database unit after the connection is restored. Preferably the failed database update process initiates the above-mentioned pull database process in the reader immediately or after network connection to the database unit is restored. It is also possible that the database unit is arranged to detect failures in the update process and arranged to perform the update process again for the failed units after a certain period of time.

A reader that is being updated maintains full functionality. For example an access control reader may be configured to perform a certain number of read sequences per second while it is being updated and thus grant (or deny) access if needed. This enables updating of the readers' databases regardless of a point of time or activity of the readers. Preferably the readers can be configured to perform less read sequences and more data transfer for the update process during low activity periods, e.g. at night time, to perform the update process more efficiently.

Readers can be configured to store to the reader or to a controller unit and/or forward every event to the database unit. Portable readers can also work in a stand-alone mode wherein a reader stores all the events to memory and transmits the events when it detects a suitable controller unit. Said events can be for example granted/denied access or identified item/person. All the readers of the system can forward events to the same database unit over IP-network, preferably via a controller unit. This feature can be used for tracking items or persons. When an item passes a reader, for example an automatic RFID identifier, the event is stored and transmitted to the database unit, preferably with a time stamp.

Example: an item is produced in a factory and when it leaves the production line, it is first identified. When a customer buys the item, it is identified when it leaves the factory. The item is delivered to a harbor where it is identified again. Next identification is on a ship where it is loaded. The ship reaches a destination harbor where the item is once again identified. A truck picks up the item at the destination harbor and the item is identified. Final identifying can be done when the item is delivered to the customer. All the readers that identify the item are part of the same RFID system so all the readers transmit their events (identification of the item in this case) to the same database unit over IP-network. This way the item can be tracked by the producer and/or by the customer.

To a person skilled in the art, the foregoing exemplary embodiments illustrate the model presented in this application whereby it is possible to design different methods and arrangements, which in obvious ways to the expert, utilize the inventive idea presented in this application.

## Claims

1. Database management method for RFID system, **characterized in that** the method comprises steps of:
- updating databases wirelessly in fixed and/or portable RFID readers of the system over IP-network from a single database unit, and
- storing at least one preceding version of the updatable database to the RFID reader.

2. The method of claim 1, **wherein** the databases of all the RFID readers of the system are updated.

3. The method of claim 1, **wherein** the method comprises transmitting and/or receiving data between said database unit and said readers via a controller unit.

4. The method of claim 1, **wherein** the updating of said databases can be initiated by a database unit (push database) and by a reader (pull database).

5. The method of claim 1, **wherein** the method comprises configuring the RFID readers to transmit RFID related information at least partially over IP-network to the database unit.

6. The method of claim 1, **wherein** the method comprises configuring an RFID reader to function and gather information in a stand-alone mode when network connection is lost, and forwarding said information when network connection is restored.

7. The method of claim 1, wherein said IP-network is a fixed network, a wireless network or a combination of fixed and wireless networks.

8. An RFID system comprising a database unit and plurality of RFID readers, **characterized in that** it realizes the method of any of the preceding claims.

9. A software code product on a computer readable medium, **characterized in that** it comprises means for updating a database or to constitute database that is mengeable by any previous method claim, when run in a microprocessor.
